# EUROPEAN PATENT SPECIFICATION

(11) **EP 0 207 469 B1**
(45) Date of publication and mention of the grant of the patent: **31.03.1993**
(21) Application number: 86108797.1
(22) Date of filing: 27.06.1986
(51) Int. Cl.: C01G 25/00

(54) **Flaky zirconia type fine crystals and method for producing them**
Schuppenartige feine Kristalle des Zirkoniumoxydtyps und Verfahren zu deren Herstellung
Cristaux fins écailleux du type zircone et leur procédé d'obtention

(30) Priority: 03.07.1985 JP 147238/85; 10.12.1985 JP 278526/85; 10.12.1985 JP 278527/85
(43) Date of publication of application: 07.01.1987
(73) Proprietor: NISSAN CHEMICAL INDUSTRIES LTD., Chiyoda-ku Tokyo (JP)
(72) Inventor: Kato, Etsuro, Nagakute-cho Aichi-gun Aichi-ken (JP)
(74) Representative: TER MEER STEINMEISTER & PARTNER GbR

(56) References cited:
- GB-A- 2 035 587
- AUSTRALIAN JOURNAL OF CHEMISTRY, vol. 20, March 1967, pages 415-428; I.J. BEAR: "Factors influencing the mode of thermal decomposition of zirconium sulphate tetrahydrate"
- THE JOURNAL OF THE AMERICAN CHEMICAL SOCIETY, vol. 74, April-June 1952, pages 2104,2105, Mack Printing Co.; W.S. CLABAUGH et al.: "Method for freeing zirconium of common impurities and for preparing zirconium sulfate and oxide"

## Description

### BACKGROUND OF THE INVENTION

This invention concerns flaky zirconia fine crystals as well as methods of producing them.

Zirconia (ZrO₂ and solid-solutions thereof are hereinafter collectively referred to as zirconia) are highly refractory oxides and have various kinds of application uses as fine ceramics. Particularly, those containing Y₂O₃ solid-solubilized therein have now been highlighted as oxygen sensors and high strength engineering ceramics, as well as used in a great amount as the starting material for piezoelectric ceramics. Fine zirconia particles have generally been used as the starting material for the abovementioned fine ceramics and finely powdered particles of a spherical shape have been used due to their excellent packing and sintering properties.

GB-A-2 035 587 discloses a method for producing photographic products containing white image background layers wherein lamellar zirconium dioxide pigments are deposited on the sodium fluoride release layer of a polyester substrate by a vapor deposition. After washing and filtration the dry zirconium dioxide pigments are calcined to produce lamellar zirconium dioxide flakes with a particles size between 1000 to 12000 nm. Australian Journal of Chemistry, Vol. 20, pages 415-428 discloses a review about the influence of heat to zirconium sulfate tetrahydrate at temperatures between 300 to 700°C.

However, for the flaky zirconia fine particles, there has been known at all neither an industrial production method nor a literatural disclosure even for an attempt for an application use at present.

### SUMMARY OF THE INVENTION

Accordingly, it is an object of the present invention to provide novel flaky zirconia fine crystals.

Another object of the present invention is to provide a method of producing the novel flaky zirconia fine crystals.

As a result of extensive studies, the present inventor has found that flaky zirconia fine crystals containing SO₄ ions having not yet been known at all are formed by subjecting an aqueous acidic solution at a pH of less than 2 containing from 0.1 to 1.5 atom/liter of a soluble zirconium salt as Zr and from 0.2 to 3g ion/liter of SO₄ ions to a heat treatment at a temperature from 110 to 350°C. As the result of the analysis, the fine crystals are flaky hexagonal or disclike flaky crystals having a lamellar structure with layers having a thickness of the crystal of less than 50 nm (500Å) and a size of the crystal in the direction parallel to the plane of the layers of greater than five times of said thickness, which are composed of a compound containing metal ions of Zr and SO₄ ions in an amount of 2/5 of the number of Zr ions.

The flaky zirconia crystals containing SO₄ ions can form flaky zirconia crystals that maintain the original flaky shape by heat treatment at a temperature higher than 600°C to cause decomposition and desulfurization.

The present inventor has also found that flaky hydrous zirconia crystals having a thickness of the crystal of less than 20 nm (200 Å) can be obtained by aging the flaky zirconia crystals containing SO₄ ions prepared by the method as described above in an aqueous basic solution. The flaky crystals show no substantial change before and after the aging when observed under powder X-ray diffractometry.

The present inventor has further found surprisingly that flaky zirconia crystals maintaining a tetragonal or cubic form having a thickness of the crystal of less than 20 nm (200Å) can be obtained also by calcining the above-mentioned hydrous zirconia crystals at a temperature of higher than 600°C.

Specifically, the flaky zirconia fine crystals according to the present invention include the following crystals:

Firstly, flaky zirconia crystals containing SO₄ ions and being composed of a component containing metal ions of Zr and SO₄ in an amount of 2/5 of the number of Zr ions having crystallographically a 6- or 3- fold axis of symmetry in perpendicular to the plane of the lamellar layers, and in which the relative positions of Zr and O are similar to those in ZrO₂ crystals and the main peaks in the chart of powder X-ray diffractometry are at identical positions compared to those of tetragonal or cubic ZrO₂ crystals, and, in addition, comprises a peak with a 2 ϑ value near 8°.

Secondly, flaky zirconia fine crystals obtained by heating to a temperature higher than 600°C to desulfurize the flaky zirconia crystals containing SO₄ ions as described above.

Thirdly, flaky hydrous zirconia fine crystals obtained by subjecting the flaky zirconia crystals containing SO₄ ions to an aging treatment in an aqueous solution having a pH of higher than 8 to replace and to remove SO₄ ions.

Fourthly, flaky zirconia fine crystals obtained by calcining the flaky hydrous zirconia fine crystals at a temperature higher than 600°C.

### BRIEF DESCRIPTION OF THE DRAWINGS

The above and other objects, features and advantages of the invention will become more apparent from the following description and claims taken in conjunction with the accompanying drawings, in which :

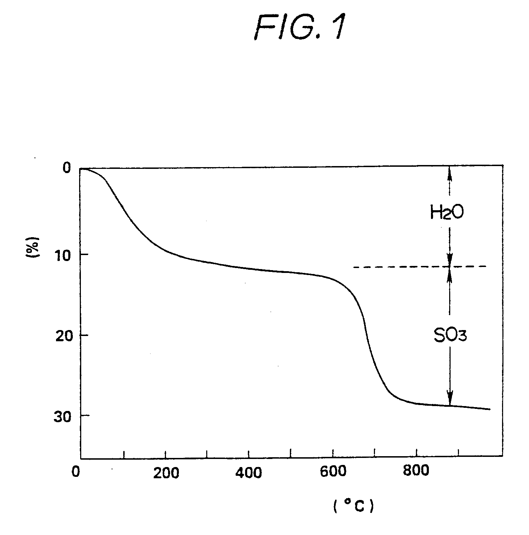

Figure 1 shows the result of thermogravimetric analysis for a powder of flaky zirconia crystals containing SO₄ ion according according to the invention,

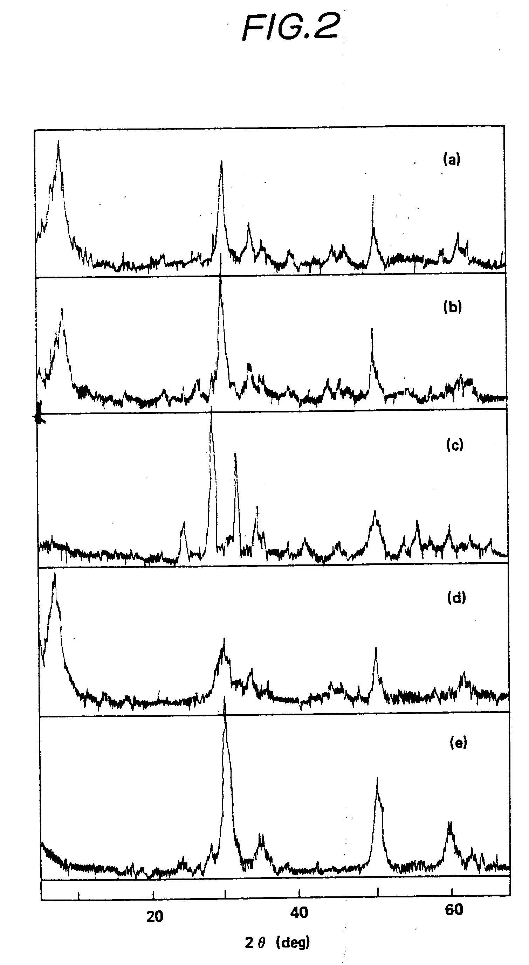

Figure 2 shows the chart for the powder X-ray diffractometry (CuKα) for the specimens, in which (a) shows highly crystalline flaky zirconia crystals containing SO₄ ion according to this invention, (b) shows the powder prepared by calcining (a) at 600°C, (c) shows the powder prepared by calcining (a) at 700°C, (d) shows the fine crystals somewhat "lower in the crystallinity" as compared with (a), and (e) shows tetragonal ZrO₂ fine crystals, for comparison purposes, prepared by calcining zirconium hydroxide at a low temperature,

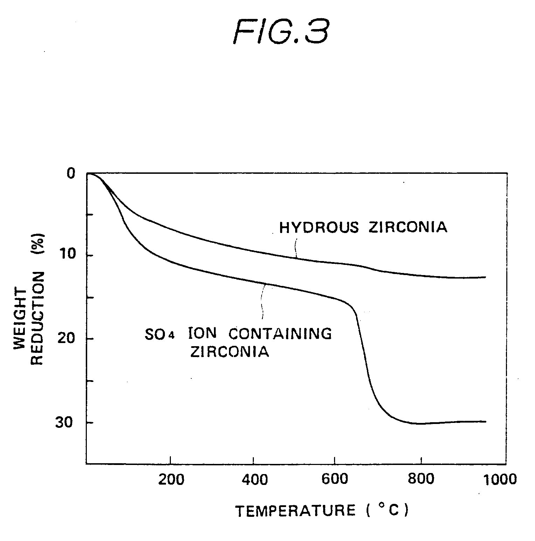

Figure 3 shows the result of thermogravimetric analysis for a powder composed of flaky hydrous zirconia crystals according to this invention,

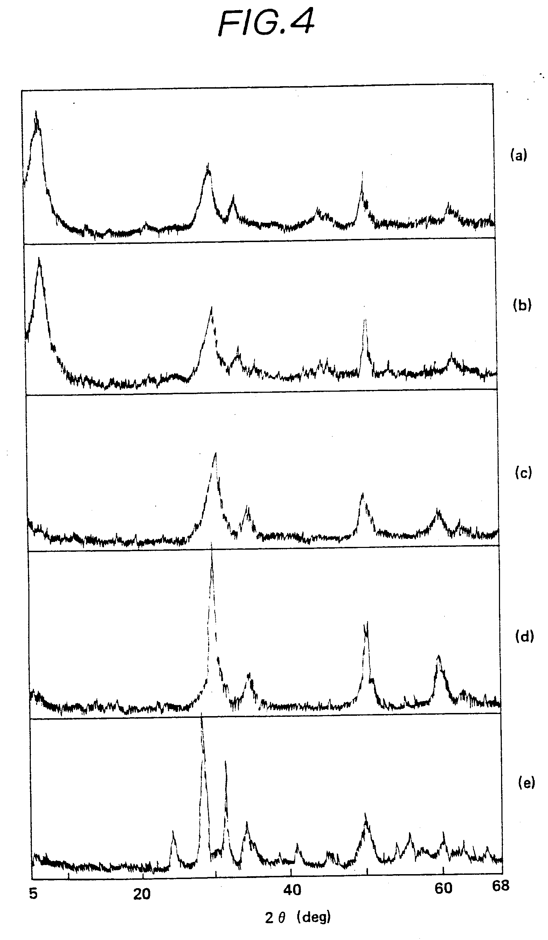

Figure 4 shows the chart for the powder x-ray diffractometry (CuKα) for the specimens, in which (a) shows flaky zirconia fine crystals containing SO₄ ion according to the present invention, (b) shows flaky hydrous zirconia crystals according to this invention obtained after aging of (a), (c) and (d) show, respectively, tetragonal or cubic zirconia crystals prepared by subjecting (b) to a heat treatment at 700°C and 1000°C, respectively, and (e) shows monoclinic zirconia fine crystals prepared by subjecting (a) to a heat treatment at 1000°C.

### DETAILED DESCRIPTION OF THE INVENTION

As described above, the flaky zirconia crystals according to one embodiment of the present invention have a lamellar structure with layers having a thickness of the crystal of less than 50nm (500 Å) and a size of the crystal in the direction parallel to the plane of the layers of greater than five times the thickness of said crystal and comprising a peak in the powder X-ray diffractometry (Cukα) with a 2 ϑ value near 8° showing the lamellar structure.

The first flaky zirconia crystals according to the present invention are flaky SO₄ ion containing zirconia crystals being composed of a component containing metal ions of Zr and SO₄ ions in an amount of 2/5 of the number of Zr ions having crystallographically 6- or 3- fold axis of symmetry in perpendicular to the plane of the lamellar layers, and in which the relative positions of Zr and O are similar to those in ZrO₂ crystals and the main peaks in the chart of powder X-ray diffractometry are at identical positions compared to those of tetragonal or cubic ZrO₂ crystals, and, in addition comprises a peak with a 2 ϑ value near 8°. They are prepared by heat treating at a temperature from 110 to 350°C an aqueous acidic solution containing from 0.1 to 1.5 g atom/liter of a soluble zirconium salt as Zr and from 0.2 to 3 g ion/liter of SO₄ ions, at a pH of less than 2. More detailedly, soluble zirconium salts as the starting material for the flaky zirconia crystals containing SO₄ ions according to this invention can include zirconium oxycarbonate, zirconium oxychloride, zirconium oxysulfate, zirconium carbonate, zirconium chloride or zirconium sulfate. The time required for this method ranges from one hour to five days, depending on the composition of the solution and the processing temperature. A Concentration of Zr in the aqueous solution of lower than 0.1 g atom/liter or a concentration of SO₄ ions of higher than 3 g ion/ liter does not constitute a practical range. It is preferred for obtaining satisfactory results to keep the Zr concentration within a range from 0.2 to 1 g atom/liter, the SO₄ ions concentration in a range from 0.4 to 1.5 g ion/liter and the molar ratio of SO₄/Zr at higher than 1.

As shown by analysis, the obtained flaky crystals are composed of a component containing metal ions of Zr and SO₄ ions in an amount of 2/5 of the number of Zr ions and are crystallized as hexagonal plate-like or disc-like flaky crystals having a thickness of the crystal less than 50nm (500 Å) and a size of the crystal in the direction parallel to the plane of layers of greater than five times the thickness of said crystal.

According to the electron diffractometry, the flaky crystals have crystallographically a 6- or 3-fold axis of symmetry in perpendicular to the plane of the lamellar layers and, as shown in the powder X-ray diffractometry in Figure 2 (a), have such a crystal structure that the main peaks are at identical positions compared to those of tetragonal or cubic zirconia (Figure 2 (e)), in addition to a peak with a 2ϑ value mean 8°. It is extremely important that the amount of SO₄ ions is relatively small as compared to Zr, that the relative positions of Zr and O are similar to those of tetragonal or cubic zirconia and that the spatial density in the crystals is nearly equal to that of ZrO₂. While water incorporated is lost by heating till 200°C as shown in Figure 1, the crystal structure can be kept with no substantial change and remains stable in air up to a temperature of 600°C. When they are heat treated further at a higher temperature, monoclinic flaky zirconia crystals having a relatively high strength can be prepared. The flaky zirconia crystals containing SO₄ ions obtained by the method according to this invention are flocculated to precipitate below a pH of about 3 and are peptized at pH values of about 5 to 6 to form sols. Further, they can be obtained as separate particles with no agglomeration by drying after replacement of water with an organic solvent or by freeze drying.

The second flaky zirconia crystals of the present invention are the monoclinic zirconia crystals having a thickness of crystal of less than 50nm (500 Å) and a size of the crystal in the direction parallel to the plane of the flaky shape of greater than five times said thickness. They can be obtained by desulfurization of the above-said flaky zirconia crystals containing SO₄ ions by a heat treatment at higher than 600°C, preferably 700 to 1000°C.

More detailedly the flaky SO₄ ion containing crystals contain water, but the water is split off at a temperature lower than about 200°C, while there is no substantial change in the crystal structure, particularly, in the relationship between Zr an O. The crystal structure is maintained up to about 600°C (Figure 2 (b)) and decomposed through desulfurization at a temperature higher than 600°C to form monoclinic zirconia (Figure 2(c)). Although the monoclinic zirconia crystals are formed into the flaky shape while leaving the shape of the flaky crystals before decomposition, some agglomeration occures between the zirconia particles depending on the decomposing conditions. However, most of the agglomerations occur between the planes of the layers and the feature of the flaky shape is not lost. Individually separated flaky monoclinic zirconia particles with no agglomeration can be obtained by homogeneously mixing the flaky zirconia crystals containing SO₄ ion with a carbonaceous material such as a caramel solution, drying and subjecting the mixture to a heat treatment, and removing the carbonaceous material through combustion at a low temperature.

Furthermore, by causing Y₂O₃ or CaO to be present together upon heat decomposition, they are solid-solubilized to obtain stabilized or partially stabilized flaky zirconia particles. These desulfurized flaky zirconia particles have a hexagonal or disc-like plateous shape depending on the shape of the original particles and any of them has sufficient shape-maintaining strength. These fine particle powder can again be dispersed in water into sols.

The third flaky zirconia crystals of the present invention are flaky hydrous zirconia crystals comprising metal ions of Zr and anions of O, in which the relative positions of Zr and O are similar to those in ZrO₂ crystals and the main peaks in the chart of powder X-ray diffractometry are at identical positions compared to those of tetragonal or cubic ZrO₂ crystals and, in addition comprises a peak with a 2 ϑ value near 8°. They can be obtained by subjecting the first flaky zirconia crystals, i.e. the flaky zirconia crystals containing SO₄ ions, to an aging treatment in a basic aqueous solution having a pH of higher than 8, to substitute and to remove SO₄ ions. The aqueous basic solution usable herein can include an aqueous ammonia solution and an aqueous alkali hydroxide solution. When the SO₄ ions are substituted through aging, the processing time can be shortened by increasing the pH of the solution or by increasing the processing temperature. However, a processing temperature higher than 150°C is not favorable since the flaky shape tends to be destroyed. The processing temperature is from 20 to 150°C, preferably from 70 to 110°C and, more preferably, from 95 to 100°C.

The thus obtained hydrous zirconia crystals are those having a lamellar structure as shown in the chart of Figure 4 (b), in which the main peaks in the chart of powder X-ray diffractometry are, in addition to a peak with a 2ϑ value mean 8°, at identical positions compared to those of tetragonal or cubic ZrO₂ crystals (Figure 4 (c), (d)), and having the flaky shape extending in the direction parallel to the plane of the layers with the thickness of less than 20nm (200 Å.)

It is extremely important that the spatial arrangement of Zr and O is nearly equal to that in tetragonal or cubic ZrO₂ crystals. While they gradually loss incorporated water up to about 700°C and are converted into tetragonal or cubic zirconia by heating as shown in Figure 3, no substantial change is observed in the particle shape.

As shown in the charts of Figure 4 (a), (b), although no substantial change is observed in the powder X-ray diffractometry chart before and after the aging, there is a significant difference in the result of the thermogravimetric analysis thereof and, as shown in Figure 3 for comparison purposes, the crystals subjected to the aging treatment show no substantial reduction in the weight due to the release of SO₃ near 650°C. It is further important that the flaky shape can be maintained as it is even after the aging treatment and high temperature treatment.

The flaky hydrous zirconia crystals according to the present invention can be obtained as individually disintegrated crystal particles with no agglomeration by by drying after the substitution of water with an organic solvent or by freeze drying. Furthermore, they are converted into flaky crystal particles of a tetragonal or cubic crystal lattice by calcining at a temperature higher than 600°C, preferably from 700 to 1300°C and, more preferably from 800 to 1100°C. It is also possible to subject them to a heat treatment by mixing them with a carbonaceous material in the same way as in the case of the flaky SO₄ ion containing zirconia crystals. Furthermore, it is also possible effect said heat treatment in the presence of Y₂O₃, CaO, MgO, etc. to obtain solid-solubilized products thereof, that is, stabilized or partially stabilized flaky zirconia crystals.

Therefore, the forth flaky zirconia crystals of the present invention are flaky zirconia crystals having a tetragonal or cubic crystal lattice, which can be obtained by calcining the above-said hydrous zirconia crystals.

Surprisingly, the flaky hydrous zirconia crystals according to the present invention can still maintain the tetragonal or cubic crystal lattice (zirconia crystals) (as shown in Figure 4 (c), (d)) and the crystals can maintain the flaky shape even after a heat treatment at a high temperature of 1000°C without adding Y₂O₃ or another stabilizer. Particularly, it is extremely unique that the crystal particles maintain the tetragonal or cubic crystal lattice without transforming into the monoclinic crystal lattice even upon calcination at 1000°C as shown in Figure 4 (d). Since the flaky SO₄ ion containing zirconia(the first flaky zirconia crystals)is transferred into monoclinic zirconia by a heat treatment at 1000°C as shown in Figure 4 (e) in the same manner as ordinary zirconia hydroxide, this is noticeable also from an academic point of view.

The flaky zirconia crystal particles according to the present invention are suitable as the main or auxiliary materials for filmous or sheet-like ceramics, because they tend to be oriented upon forming, provide a strength even to extremely thin films and decrease the shrinkage in the direction of surface area upon calcining to prevent the occurrence of crackings or warps. Further, they have a peculiar effect when used as the starting material for PZT and other piezoelectric ceramics. The piezoelectric crystals formed by a reaction with the zirconia tend to be oriented due to the flaky nature of the zirconia thereby enhancing their performance. Furthermore, since sols or slurries containing these fine crystal particles suspended therein tend to be oriented upon coating to the solid surface, they are of extremely importance in the surface treatment of ceramics, as well as for usual coating material, paint fillers, cosmetics, rust-inhibiting paints, oxidation resistant or heat resistant paints.

The present invention will further be explained more specifically referring to examples but the invention is no way limited to the following examples.

### Example 1

Reagent grade zirconyl carbonate was dissolved in sulfuric acid to prepare an aqueous solution of zirconium sulfate. The concentration of the solution was about 1.0 mol/liter of Zr and about 1.5 mol/liter of H₂SO₄ with pH being less than 1. The solution was tightly closed in a teflon vessel and subjected to a heat treatment at 200°C for 4 days in an autoclave to obtain white precipitates as colloidal suspension. When observing them under a transmission electron microscope after water washing and drying, they were fine particles of hexagonal flaky shape having a size of the crystal in the direction parallel to the plane of the layers of greater than about 100 nm (1000 Å) and a thickness of the crystal of about 7 nm (70 Å).

According to the chemical analysis, the chemical composition of the flaky fine crystals approximately corresponded to Zr₅O₈(SO₄)₂.nH₂O.

The weight change under heating of the flaky SO₄ ion containing fine crystals is as shown in Figure 1, in which the most of water was removed up to about 200°C and then the crystals were decomposed through desulfurization near 650°C.

Further, the powder X-ray diffractometry (CuKα) of the flaky SO₄ ion containing fine crystals is as shown in the chart of Figure 2 (a), in which the main peaks are at identical positions compared to those of tetragonal or cubic ZrO₂ crystals (Figure 2 (e)), and, in addition comprises a peak with a 2ϑ value near 8° showing the lamellar structure The fine crystals are thermally stable even after calcining for two hours at a temperature of 600°C and, as shown in Figure 2 (b), only the peak near 8° changes to a somewhat higher angle, but the other peaks do not show a substantial change of their position and their intensity. While the SO₄ ion containing crystals, when subjected to a heat treatment at 700°C are converted to monoclinic zirconia crystals by the desulfurization as shown in Figure 2 (c), the monoclinic zirconia crystals completely maintain the flaky shape under the observation of a transmission electron microscope.

### Example 2

Aqueous ammonia was added to reagent grade zirconia chloride to prepare precipitates of zirconium hydroxide, which were sufficiently washed with water and then incorporated with concentrated sulfuric acid to form a clear aqueous solution. An aqueous solution with a Zr concentration of 0.5 mol/liter and a H₂SO₄ concentration of 1.0 mol/liter, and an aqueous solution with a Zr concentration of 0.25 mol/liter and a H₂SO₄ concentration of 0.5 mol/liter were respectively prepared therefrom. When they were tightly closed respectively in teflon vessels and processed at 200°C for three days in an autoclave,white precipitates as a colloidal suspension were obtained respectively. According to the chemical analysis, electron microscopic observation and powder X-ray diffractometry, the former specimen had substantially the identical chemical composition, crystallinity and particle size as those obtained in Example 1, while the latter specimen was in the form of flaky fine crystals having the identical crystal structure, the disc-like shape and substantially the same chemical composition although somewhat poor in the crystallinity as shown in Figure 2 (d).

### Example 3

Reagent grade zirconyl carbonate was dissolved in sulfuric acid to prepare an aqueous solution of zirconium sulfate. The concentration of Zr was 0.25 mol/liter and that of H₂SO₄ was about 0.5 mol/liter in the solution with the pH being less than 2.0. The solution was tightly closed in a teflon vessel and subjected to a heat treatment at 200°C for two days in an autoclave to obtain white precipitates as colloidal suspension. The precipitates were SO₄ ion containing lamellar zirconia crystals containing about 0.4 mol of SO₄ ion per one g atom Zr.

The white precipitates were suspended in a 1N aqueous ammonia solution and aged at 97°C over two days and nights.

The products thus obtained were washed with water and dried. When a portion of them was observed under a transmission electron microscope, it comprised a plurality of flaky fine particles (flaky hydrous zirconia fine crystals) having a size in the direction parallel to the plane of the layers of about 100 nm (1000 Å) and having a thickness of 7 nm (70 Å). According to the chemical analysis, the amount of SO₄ ions was reduced to about 0.05 mol per one g atom Zr. However, as shown in the charts of Figures 4 (a), (b), the powder X-ray diffractometry was substantially the same between the SO₄ ion containing compound (a) before aging and the desulfurized product (b) after aging.

While the powder calcined at 700°C in air was transformed into tetragonal zirconia as shown in Figure 4 (c), the outer particle shape was extremely flaky under the observation of a transmission electron microscope and the plate thickness was less than 20 nm (200 Å), which was identical with that determined from the half-value width in the chart of powder X-ray diffractometry. While the flaky zirconia containing SO₄ ion before aging was transferred into monoclinic zirconia after heat treatment at 1000°C in the same manner as in the case of ordinary tetragonal zirconia fine particles (Figure 4 (e)), the flaky hydrous zirconia according to the present invention gives cubic zirconia crystals even after the calcination at 1000°C (Figure 4 (d)), in which there was no substantial change in the particle shape.

## Claims

1. Flaky zirconia crystals having a lamellar structure with layers, **characterized by** having a thickness of the crystal of less than 50 nm (500Å) and a size of the crystal in the direction parallel to the plane of the layers of greater than five times the thickness of said crystal and comprising a peak in the powder X-ray diffractiometry (CuKα) with a 2 ϑ value near 8° showing the lamellar structure.

2. The flaky zirconia crystals as defined in claim 1, **characterized by** containing SO₄ ions being composed of a component containing metal ions of Zr and SO₄ ions in an amount of 2/5 of the number of Zr ions having crystallographically a 6- or 3-fold axis of symmetry in perpendicular to the plane of the lamellar layers, and in which the relative positions of Zr and O are similar to those in ZrO₂ crystals and the main peaks in the chart of powder X-ray diffractometry are at identical positions compared to those of tetragonal or cubic ZrO₂ crystals and, in addition, comprises a peak with a 2 ϑ value near 8°.

3. The flaky zirconia crystals as defined in claim 1, **characterized by** being hydrous zirconia crystals comprising metal ions of Zr and anions of O in which the relative positions Zr and O are similar to those in ZrO₂ crystals and the main peaks in the chart of powder X-ray diffractometry are at identical positions compared to those of tetragonal or cubic ZrO₂ crystals and, in addition, comprises a peak with a 2 ϑ value near 8°.

4. Flaky zirconia crystals having a thickness of the crystal of less than 50 nm (500Å) and a size of the crystal in the direction parallel to the plane of the flaky shape of greater than five times said thickness wherein the flaky zirconia crystals have a monoclinic crystal lattice.

5. Flaky zirconia crystals having a thickness of the crystal of less than 20 nm (200 Å) and a size of the crystal in the direction parallel to the plane of the flaky shape of greater than five times said thickness wherein the flaky zirconia crystals have a tetragonal or cubic crystal lattice.

6. A method for producing the flaky zirconia crystals as defined in claim 2, **characterized in that** an aqueous acidic solution containing from 0.1 to 1.5 g atom/liter of a soluble zirconium salt as Zr and from 0.2 to 3 g ion/liter of SO₄ ions, at a pH of less than 2 is subjected to a heat treatment at a temperature from 110 to 350°C.

7. A method of producing the flaky zirconia crystals as defined in claim 4, **characterized in that** the flaky SO₄ ion-containing zirconia as defined in claim 2 is desulfurized by heating to a temperature higher than 600°C.

8. A method of producing flaky zirconia crystals as defined in claim 3, **characterized in that** the flaky SO₄ ion-containing zirconia as defined in claim 2 is subjected to an aging treatment in a basic aqueous solution having a pH of higher than 8 to substitute and to remove SO₄ ions.

9. A method of producing flaky zirconia crystals as defined in claim 5, **characterized in that** the flaky hydrous zirconia crystals as defined in claim 3 are calcined at a temperature higher than 600°C.

10. The flaky zirconia crystals as defined in claim 2, wherein said zirconia crystals exhibit a stable crystal structure up to a temperature of 600°C in air.

11. The flaky hydrous zirconia crystals as defined in claim 3**, characterized in that** said hydrous zirconia crystals have a thickness of the crystal of less than 20 nm (200Å) and have a flaky particle shape which remains stable up to a temperature of about 700°C.

12. The flaky desulfurized zirconia particles which comprise flaky desulfurized zirconia crystals as defined in claim 4 and an additional component selected from the group consisting of Y₂O₃ and CaO, **characterized in that** said particles are in the form of a hexagonal or disc-like plate shape.

13. The flaky tetragonal zirconia crystals as defined in claim 5, **characterized in that** said tetragonal zirconia crystals are obtained by calcining the flaky hydrous zirconia crystals of claim 3 at a temperature of from 700°C to 1300°C.

14. The flaky tetragonal zirconia crystals as defined in claim 5, **characterized in that** the thickness of the crystal is less than 20 nm (200 Å).

15. The method as defined in claim 8, **characterized in that** the aging treatment is carried out at a temperature of from 70° to 110°C.

16. The method as defined in claim 15, **characterized in that** said temperature is from 95° to 100°C.

17. The method as defined in claim 9, **characterized in that** said temperature is from 800° to 1100°C.

## Patentansprüche

1. Schuppenförmige Zirkoniumdioxidkristalle mit einer Lamellenstruktur mit Schichten, **gekennzeichnet durch** eine Dicke des Kristalls von weniger als 50 nm (500 Å) und eine Größe des Kristalls in Richtung parallel zur Ebene der Schichten, die größer als das fünffache der Dicke des Kristalls ist und bei der Pulver-Röntgenstrahlendiffraktometrie (CuKα) einen Peak mit einem 2 ϑ -Wert nahe 8° aufweist, welcher die Lamellenstruktur zeigt.

2. Schuppenförmige Zirkoniumdioxidkristalle nach Anspruch 1, **dadurch gekennzeichnet,** daß sie SO₄-Ionen enthalten und aus einer Komponente zusammengesetzt sind, welche Zr-Metallionen und SO₄-Ionen in einer Menge von 2/5 der Anzahl der Zr-Ionen enthält, kristallographisch eine 6- oder 3-fache Symmetrieachse senkrecht zur Ebene der Lamellenschichten besitzen und worin die relativen Positionen von Zr und O ähnlich denen In ZrO₂-Kristallen sind, und wobei die Hauptpeaks im Pulver-Röntgenstrahlendiffraktometriediagramm, verglichen mit denjenigen von tetragonalen oder kubischen ZrO₂-Kristallen an identischen Positionen sind, und weiterhin einen Peak mit einem 2 ϑ -Wert nähe 8° umfassen.

3. Schuppenförmige Zirkoniumdioxidkristalle nach Anspruch 1, **dadurch gekennzeichnet**, daß es wasserhaltige Zirkoniumdioxidkristalle sind, welche Zr-Metallionen und O-Anionen umfassen, wobei die relativen Positionen von Zr und O ähnlich denen in ZrO₂-Kristallen sind und die Hauptpeaks im Pulver-Röntgenstrahlendiffraktometriediagramm, verglichen mit denjenigen von tetragonalen oder kubischen ZrO₂-Kristallen an identischen Positionen sind, und weiterhin einen Peak mit einem 2 ϑ -Wert nahe 8° umfassen.

4. Schuppenförmige Zirkoniumdioxidkristalle mit einer Dicke des Kristalls von weniger als 50nm (500 Å) und einer Größe des Kristalls in Richtung parallel zur Ebene der schuppenförmigen Form von größer als dem fünffachen der Dicke, wobei die Schuppenform Zirkoniumdioxidkristalle ein monoklines Kristallgitter besitzen.

5. Schuppenförmige Zirkoniumdioxidkristalle mit einer Dicke des Kristalls von weniger als 20 nm (200 Å) und einer Größe des Kristalls in Richtung parallel zur Ebene der Schuppenform von mehr als dem fünffachen der Dicke, wobei die schuppenförmigen Zirkoniumdioxidkristalle ein tetragonales oder kubisches Kristallgitter besitzen.

6. Verfahren zur Herstellung der schuppenförmigen Zirkoniumdioxidkristalle nach Anspruch 2, **dadurch gekennzeichnet**, daß eine wäßrige saure Lösung, welche 0,1 bis 1,5g Atome/Liter eines löslichen Zirkoniumsalzes als Zr und 0,2 bis 3g Ionen/Liter an SO₄-Ionen enthält, bei einem pH von weniger als 2 einer Wärmebehandlung bei einer Temperatur von 110 bis 350 °C unterzogen wird.

7. Verfahren zur Herstellung der schuppenförmigen Zirkoniumdioxidkristalle nach Anspruch 4, **dadurch gekennzeichnet**, daß das schuppenförmige SO₄-Ionen enthaltende Zirkoniumdioxid nach Anspruch 2 durch Erhitzen auf eine Temperatur von mehr als 600 °C entschwefelt wird.

8. Verfahren zur Herstellung schuppenförmiger Zirkoniumdioxidkristalle nach Anspruch 3, **dadurch gekennzeichnet**, daß das schuppenförmige SO₄-Ionen enthaltende Zirkoniumdioxid nach Anspruch 2 in einer basischen wäßrigen Lösung mit einem pH von mehr als 8 einer Alterungsbehandlung unterzogen wird, um die SO₄-Ionen zu ersetzen und zu entfernen.

9. Verfahren zur Herstellung schuppenförmiger Zirkoniumdioxidkristalle nach Anspruch 5, **dadurch gekennzeichnet**, daß die schuppenförmigen wasserhaltigen Zirkoniumdioxidkristalle nach Anspruch 3 bei einer Temperatur von mehr als 600 °C kalziniert werden.

10. Schuppenförmige Zirkoniumdioxidkristalle nach Anspruch 2, wobei die Zirkoniumdioxidkristalle eine stabile Kristallstruktur bis zu einer Temperatur von 600 °C an Luft aufweisen.

11. Schuppenförmige wasserhaltige Zirkoniumdioxidkristalle nach Anspruch 3, **dadurch gekennzeichnet**, daß die wasserhaltigen Zirkoniumdioxidkristalle eine Dicke des Kristalls von weniger als 20 nm (200 Å) und eine schuppenförmige Teilchenform besitzen, welche bis zu einer Temperatur von etwa 700 °C stabil bleibt.

12. Schuppenförmige entschwefelte Zirkoniumdioxidteilchen, welche schuppenförmige entschwefelte Zirkoniumdioxidkristalle nach Anspruch 4 sowie eine weitere Komponente, welche aus der aus Y₂O₃ und CaO bestehenden Gruppe gewählt ist, umfassen, **dadurch gekennzeichnet**, daß die Teilchen in Form einer hexagonalen oder scheibenförmigen Plättchenform vorliegen.

13. Schuppenförmige tetragonale Zirkoniumdioxidkristalle nach Anspruch 5, **dadurch gekennzeichnet,** daß die tetragonalen Zirkoniumdioxidkristalle durch Kalzinieren der schuppenförmigen wasserhaltigen Zirkoniumdioxidkristalle nach Anspruch 3 bei einer Temperatur von 700 °C bis 1300 °C erhalten worden sind.

14. Schuppenförmige tetragonale Zirkoniumdioxidkristalle nach Anspruch 5, **dadurch gekennzeichnet**, daß die Dicke des Kristalls weniger als 20 nm (200 Å) beträgt.

15. Verfahren nach Anspruch 8, **dadurch gekennzeichnet**,daß die Alterungsbehandlung bei einer Temperatur von 70 bis 110 °C durchgeführt wird.

16. Verfahren nach Anspruch 15, **dadurch gekennzeichnet**, daß die Temperatur 95 bis 100 °C beträgt.

17. Verfahren nach Anspruch 9, **dadurch gekennzeichnet**, daß die Temperatur 800 bis 1100 °C beträgt.

## Revendications

1. Cristaux de zircone lamellaires possédant une structure lamellaire à feuillets, caractérisés en ce qu'ils possèdent une épaisseur du cristal inférieure à 50 nm (500 Å) et une dimension du cristal dans la direction parallèle au plan des feuillets supérieure à cinq fois l'épaisseur dudit cristal, et comportant un pic en diffractométrie X sur poudre (Kα du Cu) présentant une valeur 2 ϑ proche de 8° indiquant l a structure lamellaire.

2. Cristaux de zircone lamellaires selon la revendication 1, caractérisés en ce qu'ils contiennent des ions SO₄, qui se composent d'un constituant contenant des ions métalliques Zr et des ions SO₄ à raison de 2/5 du nombre d'ions Zr, possédant, pour ce qui est de sa cristallographie, un axe de symétrie sénaire ou ternaire perpendiculaire au plan des feuillets lamellaires, et dans lesquels les positions relatives de Zr et de O sont analogues à celles que l'on trouve dans les cristaux de ZrO₂ et les pics principaux dans le diagramme de diffraction X sur poudre sont en positions identiques à celles des cristaux ZrO₂ tétragonaux ou cubiques et, de plus, celui-ci comprend un pic présentant une valeur 2 ϑ proche de 8°.

3. Cristaux de zircone lamellaires selon la revendication 1, caractérisés en ce qu'il s'agit de cristaux de zircone hydratée comprenant des ions métalliques Zr et des anions O, dans lesquels les positions relatives de Zr et de O sont analogues à celles que l'on trouve dans les cristaux de ZrO₂ et les pics principaux dans le diagramme de diffraction X sur poudre sont en positions identiques à celles des cristaux ZrO₂ tétragonaux ou cubiques et, de plus, celui-ci comprend un pic présentant une valeur 2 ϑ proche de 8°.

4. Cristaux de zircone lamellaires possédant une épaisseur du cristal inférieure à 50 nm (500 Å) et une dimension du cristal dans la direction parallèle au plan de la forme lamellaire supérieure à cinq fois ladite épaisseur, les cristaux de zircone lamellaires possédant un réseau cristallin monoclinique.

5. Cristaux de zircone lamellaires possédant une épaisseur du cristal inférieure à 20 nm (200 Å) et une dimension du cristal dans la direction parallèle au plan de la forme lamellaire supérieure à cinq fois ladite épaisseur, les cristaux de zircone lamellaires possédant un réseau cristallin tétragonal ou cubique.

6. Procédé de production des cristaux de zircone lamellaires selon la revendication 2, caractérisé en ce qu'une solution aqueuse acide contenant de 0,1 à 1,5 atomes-g/litre d'un sel de zirconium soluble, en Zr, et de 0,2 à 3 ions-g/litre d'ions SO₄, à un pH inférieur à 2, est soumise à un traitement thermique à une température de 110 à 350°C.

7. Procédé de production des cristaux de zircone lamellaires selon la revendication 4, caractérisé en ce que la zircone lamellaire contenant les ions SO₄ définie dans la revendication 2 est désulfurée par un chauffage à une température supérieure à 600°C.

8. Procédé de production des cristaux de zircone lamellaires selon la revendication 3, caractérisé en ce que la zircone lamellaire contenant les ions SO₄ définie dans la revendication 2 est soumise à un traitement de vieillissement dans une solution aqueuse basique dont le pH est supérieur à 8, servant à substituer et à éliminer les ions SO₄.

9. Procédé de production de cristaux de zircone lamellaires selon la revendication 5, caractérisé en ce que les cristaux de zircone hydratée lamellaires définis dans la revendication 3 sont calcinés à une température supérieure à 600°C.

10. Cristaux de zircone lamellaires selon la revendication 2, dans lesquels lesdits cristaux de zircone présentent une structure cristalline stable jusqu'à une température de 600°C dans l'air.

11. Cristaux de zircone hydratée lamellaires selon la revendication 3, caractérisés en ce que lesdits cristaux de zircone hydratés possèdent une épaisseur du cristal inférieure à 20 nm (200 Å) et possèdent une forme de particules lamellaire qui demeure stable jusqu'à une température d'environ 700°C.

12. Particules lamellaires de zircone désulfurée, qui comprend des cristaux lamellaires de zircone désulfurée selon la revendication 4 et un constituant supplémentaire choisi dans le groupe constitué par Y₂O₃ et CaO, caractérisées en ce qu'elles se présentent sous une forme de plaque hexagonale ou circulaire.

13. Cristaux de zircone lamellaires tétragonaux selon la revendication 5, caractérisés en ce que lesdits cristaux de zircone tétragonaux sont obtenus par calcination des cristaux de zircone hydratée lamellaires de la revendication 3 à une température de 700°C à 1300°C.

14. Cristaux de zircone lamellaires tétragonaux selon la revendication 5, caractérisés en ce que l'épaisseur du cristal est inférieure à 20 nm (200 Å).

15. Procédé selon la revendication 8, caractérisé en ce que le traitement de vieillissement est réalisé à une température de 70° à 110°C.

16. Procédé selon la revendication 15, caractérisé en ce que ladite température est de 95° à 100°C.

17. Procédé selon la revendication 9, caractérisé en ce que ladite température est de 800° à 1100°C.
